# EUROPEAN PATENT APPLICATION

(11) **EP 2 309 435 A1**
(43) Date of publication of application: **13.04.2011**
(21) Application number: 10187207.5
(22) Date of filing: 12.10.2010
(51) Int. Cl.: G06Q 10/00

(54) **System for representing an organisation**

(30) Priority: 12.10.2009 GB 0917846
(71) Applicant: Salamander Enterprises Limited, York Science park York YO10 5ZF (GB)
(72) Inventor: Whittington, Dick, York, YO10 5ZF (GB); Smith, Simon, York, YO10 5ZF (GB)
(74) Representative: Wood, Graham

(57) **Abstract**

The invention relates to a method for generation of at least one model to represent an organisation or part thereof. The model includes the ability for a user enquiry to be made and the generation of a viewpoint in response to the enquiry. The generation of the viewpoint includes reference to at least one parameter relating to the organisation and in particular the condition of the parameter at or nearest to the time of the enquiry being made or a user defined time.

## Description

The invention which is the subject of this application is a system and, in particular, a modelling system, which include means to allow at least one aspect of operation of an organisation to be represented graphically and contextually with respect to the organisation, so as to enable certain attributes of the organisation to be assessed, both independently of and in conjunction with, other attributes of said organization. This system provides the user with an integrated representation of the organization.

Typically, any organization and, more typically, any medium or large sized organisation, is continually required to plan, communicate and monitor the way in which it operates and also to determine how it is performing in its own area of activity. It is found that if an organization does not undertake these functions then, quite quickly, the management of the organisation can start to fail which, in turn, will cause the organisation to fail.

The need for planning, communication and monitoring to be performed requires decision making to be made by the organisation personnel and, if the decision making is to be effective, the same needs to be based on reliable evidence of the performance of the organisation. This also results in a requirement for an effective understanding of the operating condition of the organisation at that time and/or at the time of a decision being made. Furthermore, there is a need to be able to understand what effect a particular decision is liable to have on the ongoing operation of the organisation.

It is known to represent organisations using models that allow the user to visualise the organisation structure and intended behaviour. The model for an organisation, or part thereof typically includes a number of interconnected visual diagrams showing, for example, business processes; systems architecture; change portfolios and performance targets by which success is indicated, or any combination thereof. These models allow the personnel within an organisation to have a common understanding of the organisation and to allow specific investigations into specific functions of the organisation to be performed while, at the same time, ensuring that those specific investigations take into account the impact which the function which is under investigation has on other functions of the organisation. The models can allow alternative future options to be explored and, in turn, lead to a detailed design and implementation of new or modified functions of the organisation.

The use of models of the type described is known. However, there are problems in the utilisation of models of this type, which are typically referred to as "Enterprise Architecture" (EA) models. One problem is that the models are constructed as a static representation of the organisation inasmuch that once the particular model is generated, then that will continue to be used as a representation of that organisation, and will not be changed, or be easily changeable, with respect to the particular operation of the organisation at that time. This can lead to a number of problems in the support of decision making for an organisation. In particular, the models have an inability to show at a particular point in time how well the organisation (as a whole, or the components thereof,) is actually performing at that time which in turn makes it difficult, if not impossible, to assess the performance of the organisation with respect to preset targets at that time. The conventional model is therefore limited in its ability to support decision making because the current or "live" measured performance is not represented in the models.

Further problems are experienced with regard to the inability of the particular viewpoint of the model to be updated in response to the actual dynamics of the organisation and/or its environment. This therefore means that the model, and any graphical representations generated from the same will not be up to date and therefore cannot be wholly relied upon to represent the particular status of the organisation at a particular time. For example, when using the existing modelling methods, a model which is generated to represent a current portfolio of high cost projects with associated risks and projected implications on the components of the organisation would need to be manually updated to reflect any changes in project investment that affect the set of qualifying projects which is a time consuming process which is also prone to error.

A further problem is the inability for customised viewpoints (the means by which a user can request and obtain information relating to a specific request relating to the organisation from the model) of the model to be generated automatically on the basis of the user selection of relevant parameters. At present, if the creation of a view point is possible at all, the viewpoint has to be created manually at the time of developing the overall model which means that only the viewpoints which are created at the time of the model generation will be available thereafter. Thus at the time of the model development a best guess process has to be performed in order to attempt to ascertain what the required viewpoints will be on an ongoing basis. If the guess is wrong or there are new requirements at a later date it is not possible to accommodate them. This means that the effectiveness of the models to the organisation can be restricted.

An alternative modelling system is to use modelling methods of a form known as "Business Intelligence". This form of modelling provides visual access through an analytical model constructed via queries to underlying databases which represent parts of the organisation, and hence provide the user with a response that reflects, to a limited extent, the condition of the organisation at the time at which the enquiry was made. However the business intelligence method does not make use of an underlying Meta-Model and instead views are generated via database queries that select information on the basis of the content of current database schema structures and then consolidating this information within the analytical model. This business intelligence modelling approach also has problems. These include poor support for many of the graphic forms needed to convey the organisational understanding. For example, there is an inability to generate schematic business process and system architecture visual displays which have the ability to navigate around such forms and move between levels of detail. There is also an inability to produce graphical representations that cannot be described using queries against existing databases. For example, it is normally possible to generate a viewpoint showing sales by region for an organisation but known system would not be able to generate a viewpoint that aligns sales with applicable business processes, supporting information systems and/or their infrastructure dependencies.

There is also a general inflexibility in respect of the ability to change structural or behavioural aspects to enable generation of required viewpoints. This is compounded by the fact the database schema extension or redesign is costly and likely to have many dependencies on other systems. For example, introducing into the model a new type of element and its connections to existing element types would typically require significant effort.

There are known patent applications W001777872 and US2004249645 which include the concept of enterprise modelling and assume that the model is structural and used for generation of software applications in the form of process control. These patent documents do not use the concept of enterprise modelling for a broad understanding of a business organisation and/or incorporation of performance aspects to provide a decision making support beyond software design.

US2007234277, US2008163164 and US2009138549 address the modelling of performance measures for purposes of business decision making, but lack the inclusion of enterprise architecture to give context and depth to performance considerations.

W02009094290 refer to the concept of business modelling with integrated performance aspects but do so with a regard to a more formal model to support mathematical optimisation around a particular object and constraints rather than representing an organisation.

The applicant's earlier application EP04252677.2 refers to general performance methodology within the concept of general purpose architecture, but does not provide a means whereby the condition of an organisation at an instance of time of investigation using modelling, can be achieved.

US2009177625 addresses the concept of use of a query mechanism in order to extract complex data sets from information systems but does not seek to align the results obtained with a general enterprise business model.

The applicant's earlier application EP04252729.1 describes an organisation representative frame work and design process which specifies the required underlying Meta - Model mechanism. It does not address the dynamic aspects required to connect the resulting model to external information or provide support for automated viewpoint generation or parameterisation.

The aim of the present invention is to provide for the incorporation of an explicit and modifiable model, also referred to as a Meta Model, that governs the elements and permitted structures within the model, including enforcing constraints on model construction and to provide the possibility of achieving multiple viewpoints of the model which enables the needs of different personnel and/or communities within the organisation to be met with respect to their particular needs and requirements for reference to the operation of the model. The provision of these options and the availability of the same is used to control the generation of the models so as to allow joined up understanding and decision making by organisation personnel to be achieved.

In a first aspect of the invention, there is provided a system for developing and using at least one model to represent at least one aspect of an organisation, said model generated and data relating to the same held in a memory means connected to at least one visual display means and data processing means, said system including user interaction means to allow a user to enquire about the performance of an aspect of the organisation which is represented by the model, and upon receipt of the enquiry the appropriate data for the model is retrieved from the memory means and wherein to generate the visual display viewpoint in response to the user's enquiry, reference is also made to data which is representative of the condition of at least one parameter of the performance of the organisation at, or substantially at, the time of the enquiry, or at a time specified by the user and said reference is used to adapt the visual display viewpoint which is generated in response to the enquiry and made available to be shown on the visual display to the user.

The present invention therefore provides a system for representing an organisation and different aspects of that organisation within one or a series of models while, at the same time, allowing specific viewpoints for the organisation to be generated and, for the viewpoint which is generated, to be generated with respect to the time at which the request is made or another user specified time.

In one embodiment the data which is referred to is that which is available for the parameter at the specific time and therefore may be "live" data at that time, or, if the data is only collated at time intervals, is the data which has been collated at the time closest to the specific time.

Typically, the data which is referred to is then used to influence the view point which is generated such that the view point is indicative of the performance of the organisation at, or substantially at, the time of the enquiry or another specified time.

Typically, the view point which is generated is generated by first generating the viewpoint with reference to the data from the memory means which is representative of the appropriate features of the model which are required with reference to the enquiry and the said model visual representation is then adapted with respect to the data for the at least one parameter so as to represent a condition of the organisation at the time of the enquiry being made or represents the condition of the organisation with respect to at least one parameter of performance at the last time of an update in the condition of that parameter having been performed.

In one embodiment, the system allows the generation of a model which allows the visualisation of the organisation to be achieved for the purposes of individual users or communities of users through interconnected viewpoints of the organisation which can be achieved via the model data.

In one embodiment, the visual display viewpoints can be any, or any combination of, reporting structures, business processes, systems architecture, change portfolios, performance targets and/or reporting dashboards.

In one embodiment, the model and data therefore is constructed in accordance with a generic Meta Model frame work which governs and constrains the scope and/or structure and/or usage of the model or models.

Typically, the frame work which is used supports and ensures consistent generation of the required view points.

Typically, the model or models which are created are connected to at least one external source of information relating to at least one, but more typically a number of parameters which are representative of the performance of the organisation.

In one embodiment, the external source or sources all relate to the current operational performance and thereby when a visual display view point is generated, it refers to data relating to parameters of the current operating performance of the organisation.

Typically, visual display viewpoints are generated in response to a particular enquiry, and, thereafter, may be refreshed automatically to provide consistently updated reporting of a current situation of the organisation.

In one embodiment, the system provides the generation, in one embodiment automatically, at predetermined time intervals of view points which are directed to specific users and or communities requests so that they receive an updated indication of the performance of the organisation. This is achieved by referring, at the said predetermined time intervals, to the said one or more parameters whose conditions are updated with reference to the data generated representing the organisation at that time and also to those parameters which are required and are of relevance to the particular user enquiry which has been made.

In one embodiment, there is provided an aligned Meta- Model structure which is aligned with current structural and dynamic content and hence enables automatic generation of view points in response to user parameterisation, such as, in terms of time or location, to enable users to focus on required decisions.

In one embodiment, the user of the system can understand and update the enterprise structure interactions and behaviour, including the composition of any components in terms of contributing elements. The user can also access the performance of the organisation, or any selected component, against the objectives as they are being provided with a current view point of the performance of the organisation.

In one embodiment, a user or community of users can request a number of different view points to be generated using the model and each of these viewpoints will refer to at least a portion of data representative of the condition of the organisation at that time.

In one embodiment, different visual display viewpoints will refer to different parameters and hence different portions of data and the particular portions of data which are referred to for a given view point, are controlled and selected with reference to the frame work by which the model has been generated.

Typically, users and/or communities of users are able to select and subsequently change the parameters from which data is obtained, in terms of their enquiry so as to allow the selective focussing and directing of the viewpoint with regard to specific detailed aspects of the organisation such as, for example, particular geographic regions or time periods.

Typically, users or communities can introduce new visual display viewpoints with confidence and consistency to support additional forms of review and analysis and to allow the identification and investigation of the implications of options of change with confidence of unforeseen effects.

Typically, a user and/or community can instigate changes to the model and be confident that all affected view points will be updated consistently to inform subsequent decision making.

In a further aspect of the invention there is provided a system for developing and using at least one model to represent at least one aspect of an organisation, said model including an ability for a user to make an enquiry for information relating to the performance of an aspect of the organisation represented by and/or accessible via at least part of said model and in response to said enquiring a view point is generated with respect to said aspect and wherein, when generating the view point, reference is made to data representative of the condition of at least one parameter of the performance of the organisation at, or substantially at, the time of the enquiry and/or at a time specified by the user

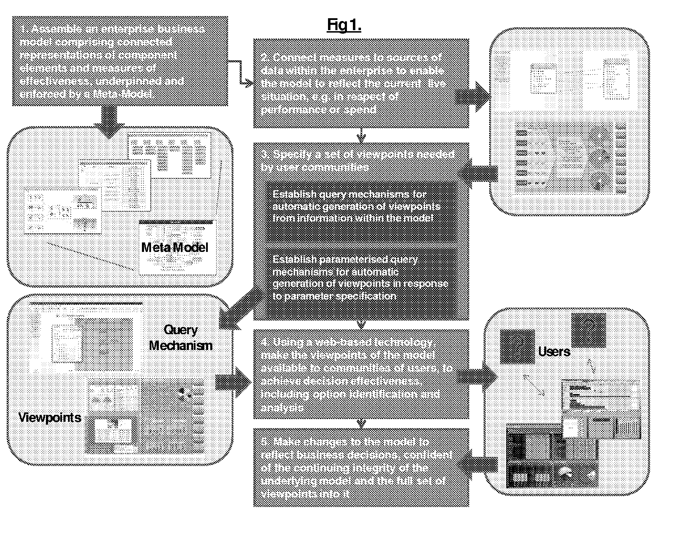

Specific embodiments of the invention are now described with reference to the accompanying figure 1 which illustrates the key steps which are performed in using the system in one embodiment of the invention.

Referring to the figure 1 there is illustrated one example of performance of the invention which is the subject of the application.

Referring now to the Figure 1 there is shown the steps which can be followed to allow the generation of a model and a means for generating visual display viewpoints generated from the same. In step 1 a meta model architecture is used to generate a model of a particular organisation and the data relating to the same is then held in memory means. The model includes component elements which are used to allow the organisation to function and also indicates connections between the elements which are required to interact for the organisation to function properly. These elements can include any or any combination of business objectives, activities, functions, risk, projects, systems, locations, interfaces and the like and also include parameters and measures of effectiveness. Typically, the generation of this model is achieved by the use of a Meta- Model organisation model frame work.

Having developed the model and stored the data relating to the same the next step is to connect the identified parameters of operation of the organisation and which are relevant to the performance of the organisation which change over time. These parameters have therefore been identified as relevant measures of performance for at least certain aspect of the organisation and in order to be used need to be connected to sources of relevant data within the organisation and which data is updated. This ensures that when a particular visual display viewpoint is to be generated in response to a user enquiry enables, the method and system can identify the relevant parameters or be told to refer to certain parameters by the user and in turn refer to the identified data sources so as to update the parameters and measures which help to define the actual operation of the organisation as time passes and so reflect the current live situation of the organisation. This means that when a viewpoint is generated, reference will be made to the data from the sources either at the time of the particular viewpoint being generated or to data for the parameter or measure which has most recently been collated at the time of the viewpoint being generated.

Step 3 allows the specification of a set of visual display viewpoints which are needed by a user or communities to support their understanding and decision making processes. These viewpoints can include where appropriate, establishing query mechanisms for automatic generation of viewpoints for information within the model and/or where appropriate, establishing parameterised query mechanisms for the automated generation of visual display viewpoints in response to parameter specifications which are input by the user at the time of making an enquiry for the generation of a visual display viewpoint.

Step 4 utilises a web-based technology to make the visual display viewpoint which is generated from the model, available to users and/or communities of users, to allow their decision effectiveness to be improved. This can include the means by which to define and identify available options and perform appropriate analysis.

Step 5 allows changes to be made to the model data to reflect business decisions so as to ensure the continuing integrity of the underlying model and this in conjunction to the reference to the live data sources relating to the identified parameters ensures that an accurate visual display viewpoint is generated on an ongoing basis.

The current invention therefore ensures that when a user or community of users wishes to access a viewpoint into the organisation, the view point which is generated will refer to at least one parameter of the organisation which in turn has been updated with data from a source within the organisation or external thereof and which data will be provided and referred to at the time of the visual display viewpoint being generated so as to allow the visual display to be adapted accordingly.. This therefore ensures that the viewpoint can be used by the user with a relatively high degree of confidence that the same represents an accurate indication of the condition of the organisation, at least with respect to the specified viewpoint, at the time of the viewpoint being referred to. This, in turn, means that any decisions which are subsequently made use the most up to date information and are therefore more likely to be accurate and successful decisions.

## Claims

1. A method for developing and using at least one model to represent at least one aspect of an organisation, said model generated and data relating to the same held in a memory means connected to at least one visual display means and data processing means, said system including user interaction means to allow a user to enquire about the performance of an aspect of the organisation which is represented by the model, and upon receipt of the enquiry the appropriate data for the model is retrieved from the memory means and wherein to generate the visual display viewpoint in response to the user's enquiry, reference is also made to data which is representative of the condition of at least one parameter of the performance of the organisation at, or substantially at, the time of the enquiry, or at a time specified by the user and said reference is used to adapt the visual display viewpoint which is generated in response to the enquiry and made available to be shown on the visual display to the user.

2. A method according to claim 1 wherein the data which is referred to is that which is available for the parameter at the specific time.

3. A method according to claim 2 wherein the data which is referred to is "live" data

4. A method according to claim 2 wherein the data which is referred to is the data which has been collated at a time closest to the specific time, if the data is only collated at time intervals.

5. A method according to claim 1 wherein the data which is referred to is used to influence the viewpoint which is generated such that the view point is indicative of the performance of the organisation at, or substantially at, the time of the enquiry or another specified time.

6. A method according to claim 1 wherein the view point which is generated represents a condition of the organisation at the time of the enquiry being made.

7. A method according to claim 1 wherein the view point which is generated represents the condition of the organisation with respect to at least one parameter or performance at the last time of an update in the condition of that parameter having being performed.

8. A method according to claim 1 wherein the model allows the visualisation of the organisation for the purposes of individual users or communities of users through interconnected view points and in response to the enquiring which is made.

9. A method according to claim 1 wherein the view point generated can be any, or any combination, of reporting structures, business processes, systems architecture, change portfolios, performance targets and/or reporting dashboards.

10. A method according to claim 1 wherein the model is constructed in accordance with a generic meta-model framework which governs and constrains the scope and/or the structure and/or usage the of the model or models.

11. A method according to claim 10 wherein the framework supports and ensures consistent generation of required viewpoints.

12. A method according to claim 1 wherein the model or models which are created are connected to at least one external source of information relating to at least one parameter of the organisation.

13. A method according to claim 12 wherein the external source or sources relate to the current operational performance of the organisation.

14. A method according to claim 1 wherein the view point generated in response to a particular enquiry is refreshed automatically at predefined times in order to provide an updated indication of the current situation of the organisation.

15. A method according to claim 14 wherein there is generated at predetermined time intervals one or more view points directed to specific user and/or community enquiries such that they receive an updated indication of the performance of the aspect of the organisation to which the enquiry relates.

16. A method according to claim 1 wherein viewpoint created in response to a user enquiry can be generated with respect to one or parameters of the organisation specifically requested by the user.

17. A system for developing and using at least one model to represent at least one aspect of an organisation, said model including an ability for a user to make an enquiry for information relating to the performance of an aspect of the organisation represented by and/or accessible via at least part of said model and in response to said enquiring a view point is generated with respect to said aspect and wherein, when generating the view point, reference is made to data representative of the condition of at least one parameter of the performance of the organisation at, or substantially at, the time of the enquiry and/or at a time specified by the user.
